(19) **Europäisches Patentamt / European Patent Office / Office européen des brevets**

(11) **EP 1 143 057 B1**

(12) **EUROPEAN PATENT SPECIFICATION**

(45) Date of publication and mention of the grant of the patent:
**17.02.2010 Bulletin 2010/07**

(51) Int Cl.:
*D04H 1/48* (2006.01)    *B01D 39/16* (2006.01)
*D04H 1/00* (2006.01)    *D04H 1/70* (2006.01)
*D04H 1/72* (2006.01)

(21) Application number: **99940565.7**

(22) Date of filing: **30.08.1999**

(86) International application number:
**PCT/JP1999/004687**

(87) International publication number:
**WO 2000/012802 (09.03.2000 Gazette 2000/10)**

(54) **NONWOVEN FABRIC AND PRODUCTION METHOD THEREOF, PRODUCTION DEVICE USED FOR THE METHOD**

VLIESSTOFF, HERSTELLUNGSVERFAHREN UND VORRICHTUNG

STRUCTURE NON-TISSEE ET PROCEDE PERMETTANT DE LA PRODUIRE, DISPOSITIF DE PRODUCTION UTILISE POUR METTRE LEDIT PROCEDE EN OEUVRE

(84) Designated Contracting States:
**DE FR GB**

(30) Priority: **01.09.1998 JP 24688898**
**15.04.1999 JP 10765799**
**17.06.1999 JP 17081399**
**17.06.1999 JP 17081499**
**28.07.1999 JP 21341099**

(43) Date of publication of application:
**10.10.2001 Bulletin 2001/41**

(73) Proprietor: **Teijin Fibers Limited**
**Osaka-shi, Osaka 541-0054 (JP)**

(72) Inventors:
• **YOSHIDA, Hiroji**
**Okazaki-shi,**
**Aichi 444-0244 (JP)**
• **NAGATA, Makio**
**Hofu-shi,**
**Yamaguchi 747-0001 (JP)**
• **WATANABE, Noboru**
**Sabae-shi,**
**Fukui 916-0015 (JP)**
• **ONOUE, Hiroshi**
**Osaka-shi,**
**Osaka 534-0023 (JP)**

(74) Representative: **Reinhard - Skuhra - Weise & Partner GbR**
**Patent- und Rechtsanwälte**
**P.O. Box 440151**
**80750 München (DE)**

(56) References cited:
EP-A- 0 340 763    GB-A- 2 099 869
GB-A- 2 245 607    JP-A- 8 269 860
JP-A- 9 078 425    JP-A- 05 098 520
JP-A- 09 137 350    JP-B- 2 060 779
US-A- 4 083 913    US-A- 4 656 694

**Description**

Technical Field

This invention concerns a production method of non-woven fabrics by interweaving short fibers and, more specifically, relates to a method of producing non-woven fabrics in which the short fibers constituting the fabric have a three dimensional randomicity in view of the directionality, of, and non-woven fabric structures.

Background Art

Heretofore, for producing webs used as non-woven fabrics, they have been produced by arranging fibers in parallel to some extent while combing fibers by a cylinder and a card clothing using a carding machine used in a carding step and then scraping off and collecting fibers transferred to needle heads of a doffer by a comb or the like (carding method). Further, they have been produced by a method of scattering short fibers in air and then collecting them into a sheet-like shape on a metal net (air lay method). Further, as a made of utilizing such non-woven fabrics, they are used for sound absorbing materials such as for vehicle or residential uses, or sound shielding walls of highways and it has been known that the sound absorbing characteristics can be improved as the fiber denier of constituent fibers is smaller.

Further, Japanese Patent Laid-Open No. 110370/1998 describes that more favorable sound absorbing characteristics are generally exhibited in a case of using fibers for sound absorbing materials as the sound absorbing materials have higher density and, increased thickness and the denier of constituent fibers is finer, and further that when fibers are arranged along random directions within a surface parallel with the surface of the sound absorbing material, more excellent sound absorbing property can be provided compared, for example, with those in which fibers are arranged along one direction, for example, as those obtained by putting the fibers to a card into webs and laminating the webs.

However, even when webs are intended to be produced by using fibers of fine denier as the constituent fibers by the carding method, the fibers sink into the card clothing of the carding machine or form neps to extremely deteriorate the quality or lower the machine operationability if the denier is less than 1.5 denier. Further, in the carding machine, since the webs are formed under carding as described previously, the fiber are always arranged in a predetermined direction. Further, in the air lay method, it is difficult to attain a laminate state having a sufficiently uniform thickness to result in unevenness in the sound absorbing characteristics of the non-woven fabrics, which is not preferred in view of the quality.

Further, the Japanese Patent Laid-Open No. 1103070/1998 describes that non-woven fabrics can be produced in which fibers are arranged at random in a surface parallel with the surface of sound absorbing materials, by mixing constituent fibers, then mixing and opening them by carding and then applying blow molding by using an air stream. However, since fibers are once arranged in one direction by a carding treatment in the carding machine before blowing, fiber orientation in the obtained non-woven fabrics has no sufficient two dimensional randomicity. Further, since the fibers are accumulated by the air stream blow molding in a direction perpendicular to the surface of the sound absorbing materials, it involves a drawback of easily suffering from peeling in the laminating direction.

Further, Japanese Patent Laid-Open No. 209514/1996 discloses a technique for cushion materials having excellent heat resistance, durability and cushioning property by meandering a continuous linear body of thermoplastic resin having an extremely large fiber denier (300 denier or more) to form three dimensional random loops, whereby the entire network structure comprising three dimensional random loops integrated by fusion deforms to absorb-stresses when undergoing large deformation by extremely large stresses, and restores the structure into the original shape after relieving of the stresses by the development of rubbery elasticity of the elastic resin.

However, even when webs are intended to be produced by using fibers of 100 denier or more as the constituent fibers by the carding method, the fibers of the large denier slip off the card clothing of the carding machine and the fibers can not be scraped off and collected by a comb or the like, to remarkably deteriorate the machine operationability. Furthermore, since webs are formed under carding in the carding machine, the fibers are always arranged in a predetermined direction. Further, it is difficult to attain a laminate state having a sufficiently uniform thickness by the air lay method and unevenness is caused to the characteristics of the cushion material in the direction of the thickness, which is not preferred in view of the quality.

Further, Japanese Patent Laid-Open No. 68061/1995 describes that a thermoplastic elastic resin is melted by heating to a temperature higher by 10 to 80°C than the melting point, discharged downward from a nozzle having plural orifices and lowered spontaneously to form loops, in which the loop radius and the denier of the linear bodies are determined depending on the distance between the nozzle surface and a take-up conveyer disposed on a cooling medium for solidifying the resin, the melt viscosity of the resin, the pore diameter of the orifice and the discharging amount. That is, no desired three dimensional linear bodies can be obtained unless such production conditions are determined specifically, so that they can not be produced easily. Further, no desired cushion materials can be obtained without using the thermoplastic elastic resin. Use of the thermoplastic elastic resin involves a problem that the production cost increases and the products become heavy for obtaining a desired impact resilience since the impact resilience per one denier of the fibers used and the impact resilience per unit density of the non-woven fabric structure are small.

Further, as a mode of utilizing the non-woven fabric as a filter, Japanese Patent Laid-Open No. 209514/1996 discloses a technique of preparing webs of fine denier and webs of large denier respectively, combining them into a fiber structure and using the same as a filter in order to maintain the collecting effect while restricting the pressure loss by using extremely large fibers.

However, even when webs are intended to be produced by using fibers of 1000 denier or more as the constituent fibers by the carding method, the fibers of the large denier slip off the card clothing of the carding machine and the fibers can not be scraped off and collected by a comb or the like to remarkably deteriorate the machine operationability. Furthermore, since webs are formed under carding in the carding machine, the fibers are always arranged in a predetermined direction. Further, it is difficult to attain a laminate state having a sufficiently uniform thickness by the air lay method and unevenness is caused to the characteristics of the filter in the direction of the thickness, which is not preferred in view of the quality.

Further, in the technique as described in Japanese Patent Laid-Open No. 209514/1996, fibers are arranged at random irrespective of the longitudinal/lateral directions, but those arranged at random in longitudinal/lateral/height directions can not be produced. Accordingly, a filter having excellent collecting characteristics in the three directions can not be produced. Accordingly, it is not suitable to such a use as sterical filters intended for collection in multi-directions.

Further, Japanese Patent Laid-Open No. 94061/1994 discloses a sheet-like non-woven fabric produced by using fibers such as polyester as a raw material, and molding the fibers into a fiber assembly by a charging method of blowing the fibers together with air into a mold. Further, there is also a method of producing a non-woven structure having a complicate sterical structure such as automobile seat cushions, by manufacturing the seat cushion divisionally for each portion having a simple shape and then assembling them.

However, in the blow molding method disclosed in Japanese Patent Laid-Open No. 294061/1994, it is difficult to make the density distribution in the seat cushion uniform as the molding product and, if it is intended to be uniform, the density has to be increased extremely and, as a result, the produced non-woven fabric structure is heavy. Further, in the method of patching non-woven fabrics, the number of small parts is increased in a seat cushion of a complicate shape, which greatly increases the production cost.

Further, since the temperature in a vehicle is elevated up to 70 - 100°C in the summer season under direct sunlight in a state where doors are closed, it has been demanded for the automobile seat cushion materials to improve the restorability after applying a load for a long time in a high temperature atmosphere. Further, since the mattress materials for use in beds are subjected to a laundry treatment or sterilizing treatment at a high temperature in their stacked state, it has been demanded that they cause no deformation by expansion or compression after applying the load in a high temperature atmosphere.

GB-A-2245607 describes a non-woven fabric of a three dimensional structure comprising fibers arranged along random directions in at least two surfaces of the three dimensional structure, the non-woven fabric having bonding portions of contact between each of the fibers.

US-A-4,083,913 describes air-laid fibrous webs formed from randomly-oriented mixed fibers containing a minor portion of short, flock-length, thermoplastic and thermoretractile fibers.

EP-A-340763 describes a thermobondable biocomponent synthetic fiber with a length of at least about 3 mm, adapted to use in the blending of fluff pulp for the production of hygiene absorbent products, the fiber comprising an inner core component and an outer sheath component, in which the core component comprises a polyolefin or a polyester, the sheath component comprises a polyolefin, and the core component has a higher melting point than the sheath component, and a process for producing said fiber.

Further, it has been known that when products used for cushion materials such as vehicle seat materials or mattresses for home or hospital uses are applied with a smoothing oil agent such as silicon on the surface of the constituent fibers thereof , the restorability after long time compression in a normal temperature or high temperature atmosphere can be improved. For example, Japanese Patent Laid-Open No. 137350/1997 describes a cushion structure in which a smoothing oil agent is coated on a fiber surface to reduce friction between each of the fibers and improve the restorability upon removing the load.

However, even when it is intended to produce webs by using fibers coated with the smoothing oil agent as the constituent fibers in the carding method, fibers coated with the smoothing oil agent slip off the card clothing of a carding machine and the fibers can not be scraped off and collected by a comb or the line, to remarkably deteriorate the machine operationability. Further, when it is coated to the surface after being formed into the cushion structure, the smoothing oil agent is not coated to the surfaces of the individual constituent fibers failing to develop the desired effect. Further, in the carding machine, since the webs are formed under carding, fibers are always arranged in a predetermined direction. Further, in the air lay method, it is difficult to attain a lamination state having a sufficiently uniform thickness and unevenness is caused to the cushioning characteristic of the non-woven fabric, which is not preferred in view of the quality.

Then, with an aim of improving the sound absorbing characteristics, improving the cushioning property and improving the collecting effect, this invention intends to provide non-woven fabrics having fiber orientation which is uniform and three dimensionally at random, a production method capable of producing such non-woven fabrics simply and easily.

Disclosure of the Invention

This invention provides a method for producing a non-woven fabric of a three dimensional structure comprising fibers arranged along random directions in at least two surfaces of the three dimensional structure, which comprises preliminary opening fibers by a preliminary opening machine, then accumulating fibers so as to automatically stack them vertically to a portion of a low stacking level by using an air stream and then substantially bonding portions of contact between each of the fibers.

Further, this invention provides a non-woven fabric structure constituted by bonding plural fiber lumps each comprising fibers in which the fiber lumps comprise at least two kinds of fibers, one of constituent fibers contains an ingredient having a melting point lower than that of other fibers, the fiber lumps are substantially bonded at portions of contact between each of the fibers with the low melting ingredient and the fibers constituting the fiber lump are arranged along random directions in at least two surfaces of the fiber lump.

Brief Explanation of Drawings

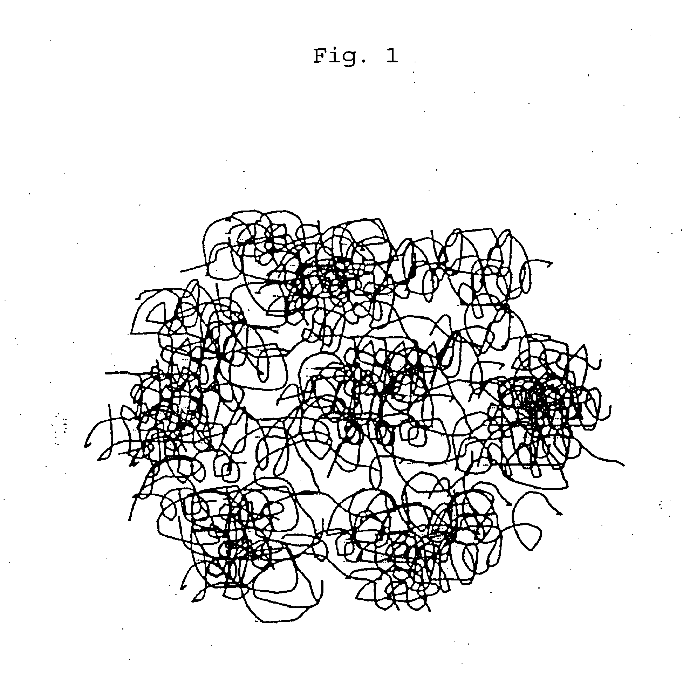

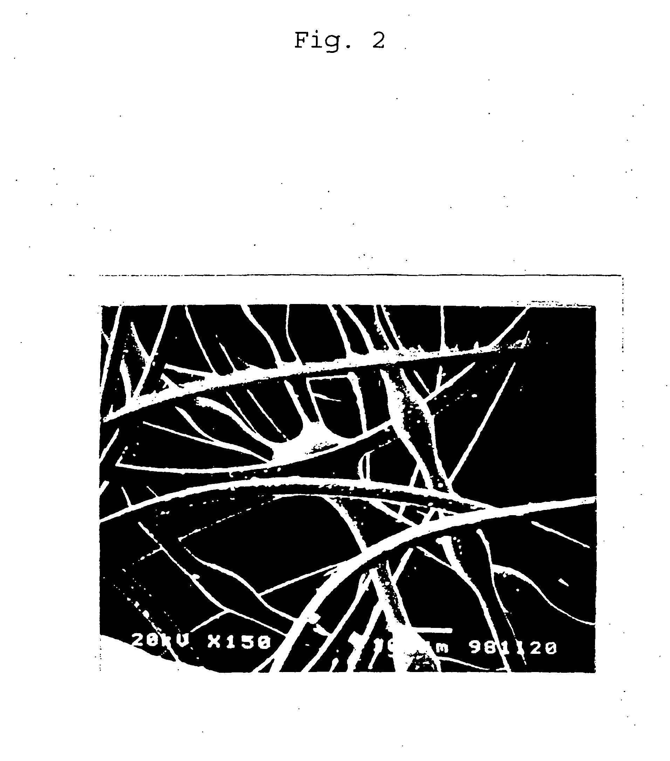

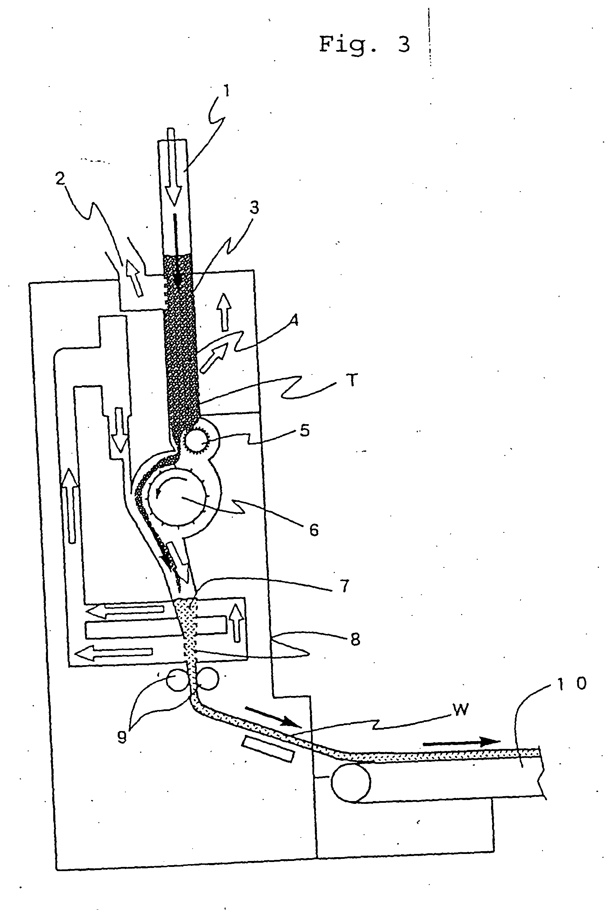

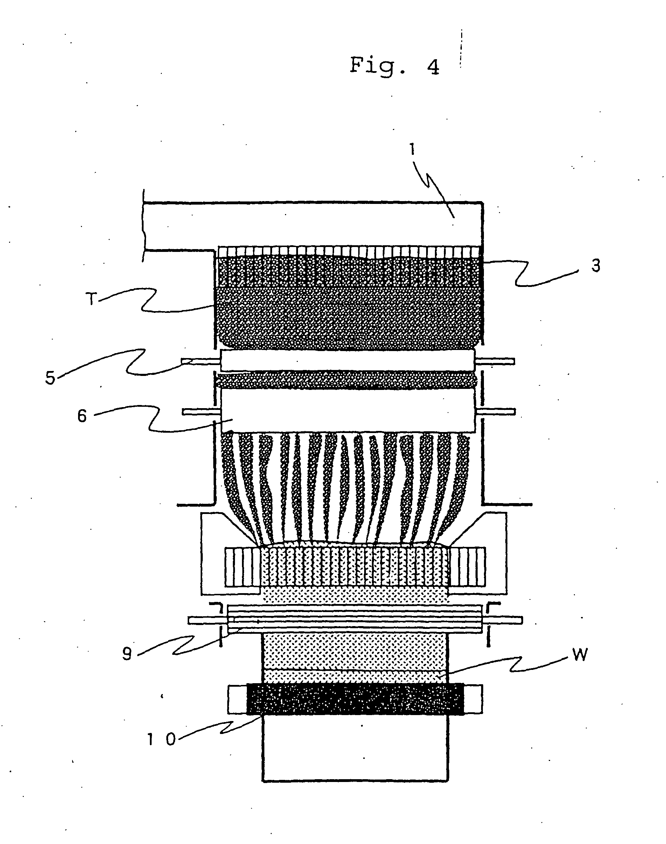

Fig. 1 is a schematic view illustrating a state of a non-woven fabric structure according to this invention, Fig. 2 is an electron microscopic photograph of a non-woven fabric structure according to this invention applied with a super heating treatment, Fig. 3 is a side elevational view of a production apparatus and Fig. 4 is a front elevational view of the production apparatus.

Best Mode for Practicing the Invention

The method to produce the non-woven fabric according to this invention is to be described below. This example is merely an example of embodiments and the invention is not restricted to such example.

The non-woven fabric produced with the method according to this invention mainly comprises polyester fibers substantially bonded at portions of contact between each of the fibers and in which constituent fibers are arranged along random directions in at least two surfaces of the non-woven fabric structure.

The fibers constituting the non-woven fabric include, for example, polyester fibers having a side-by-side structure and having self-crimping developability (fiber denier: 6.0 denier, fiber length: 51 mm), extremely fine polyester fibers referred to as fine denier (fiber denier: 0.5 denier, fiber length: 51 mm), and core-sheath type composite polyester fibers in which the melting point of fibers constituting the sheath is set lowest among the fibers constituting the non-woven fabric according to this invention (fiber denier: 2.0 denier, fiber length: 38 mm). When the fibers are restricted to the polyester type, they are advantageous in view of re-melting upon recycle use.

The non-woven fabric produced according to this method of invention has a thin substantially rectangular outer profile. The most prominent feature of the non-woven fabric according to this invention is that orientation of the fibers in at least two surfaces of the rectangle is at random. This is produced in the production apparatus to be described later and the production method using the production apparatus, and randomicity for the orientation of the fibers in at least two surfaces (hereinafter referred to as "three dimensional randomicity") will be described specifically.

The three dimensional randomicity means that the directionality (orientation) of the individual fibers constituting the non-woven fabric is not aligned in a predetermined direction. For quantitatively determining the randomicity, the three dimensional randomicity is defined by the procedures as described below.

At first, samples for at least two surfaces of a cuboidal non-woven fabric (about 2 cm x 2 cm) are set to a stereoscopic microscope and image data at a magnification ratio of about 40 are taken into a image processing apparatus (Image Analyzer V10, manufactured by Toyo Boseki Co.). Then, the image data for the original image are put to "Binarization Processing" by a TOKS method and bisected such that the portion for the fibers is a black region and the portion for the background is a white region. Further, "Finely sectioning processing" is applied to the background (white region) to make the size uniform. The direction of the background is numericalized by "Fillet radius ratio (y/x ratio) "and the average value thereof (average value for about 10 data) is defined as a quantified three dimensional randomicity as an index showing the directionality of fibers of the non-woven fabric per se.

The Fillet radius is a kind of calculation processing commands for images in the image processing apparatus to conduct the following calculational processing. Assuming the abscissa as X axis and the ordinate as Y axis in the image processing apparatus, the background (white region) in the image data is calculationally processed for each of the fibers constituting the non-woven fabric applied with "Finely sectioning processing" and made uniform for the with, by defining the length of a projected horizontal radius on the horizontal X-axis as Fillet radius X, and defining the length of a projected vertical radius on the vertical Y-axis as the Fillet radius y. The calculational processing is conducted on every fibers and, based on the Fillet radius ratio as the result of the calculation, Fillet radius ratio (y/x ratio) is determined on every fibers. The thus calculationally processed Fillet radius ratio is 1.00 when the directionality is completely at random. It is 1.00 or less as the directionality approaches the X-axis while 1.00 or more as it approaches the Y-axis. When the Fillet radius ratio is determined for every fibers and the average value is determined, randomicity is attained when the Fillet radius ratio approaches 1.00. When the processing is conducted to at least two surfaces of the cuboidal non-woven fabric, and both of the Fillet radius ratio in the respective surfaces are near 1.00, it can be said to have the three dimensional randomicity.

Table 2 and Table 3 show the Fillet radius ratio as the result of operation for the non-woven fabric according to this invention (example) and for the non-woven fabric produced by the carding method as the comparative example (for the production condition such as denier and the fiber length of each non-woven fabric, refer to Table 1)

Table 1

| | Fine | Usual finess fiber | Self-crimping developable fiber | Binder fiber | Basis unit | Thickness |
|---|---|---|---|---|---|---|
| Denier<br>Fiber length | 0.5 d<br>38 mm | 2.0 d<br>51 mm | 6.0 d<br>51 mm | 2.0 d<br>51 mm | $g/m^2$ | mm |
| Example | 65% | | 15% | 20% | 700 | 40 |
| Comp. Example | | 65% | 15% | 20% | 1200 | 40 |

Table 2

| | Example | Comparative Example |
|---|---|---|
| Surface 1 | 0.98 | 0.93 |
| Surface 2 | 0.98 | 0.93 |
| Surface 3 | 0.97 | 0.91 |
| Average | 0.98 | 0.92 |

Table 3

| | Example | Comparative Example |
|---|---|---|
| Lateral side 1 | 1.01 | 0.94 |
| Lateral side 2 | 0.97 | 0.95 |
| Lateral side 3 | 0.98 | 0.94 |
| Average | 0.99 | 0.94 |

As apparent from Table 2 and Table 3, there is a difference in that the Fillet radius ratio of the non-woven fabric according to this invention is near 1.00, whereas that of the non-woven fabric produced by the carding method is less than 1.00. Accordingly, when the fiber orientation in at least two surfaces of the non-woven fabric structure is within a range from 0.95 to 1.05, this can be defined as having a three dimensional randomicity.

Then, the result of evaluation for the performance of the non-woven fabric according to this invention is shown. The performance was evaluated in accordance with the sound absorption ratio (at 1000 Hz, 2000 Hz) and static spring constant at 5 kgf as the sound absorbing characteristics in a case of using the non-woven fabric as the sound absorbing material. Table 4 shows the result.

Table 4

| | Example | Comparative Example |
|---|---|---|
| Thickness (mm) | 35.4 | 34.5 |

(continued)

| | Example | Comparative Example |
|---|---|---|
| Basis unit (g/m$^2$) | 728 | 1187 |
| Density (g/cm$^3$) | 0.021 | 0.034 |
| 25% compress ion hardness (kgf/314 cm$^2$) | 2.4 | 4.5 |
| 65% compression hardness (kgf/314 cm$^2$) | 10.2 | 27.0 |
| Sound absorption ratio at 1000 Hz (%) | 80.3 | 85.5 |
| Sound absorption ratio at 2000 Hz (%) | 99.8 | 99.7 |
| Static spring constant at 5 kgf (kgf/mm) | 0.44 | 0.68 |

Sound absorption characteristics and the mechanical characteristics shown in Table 4 were measured as below. The sound absorption ratio is a vertical incident sound absorption ratio according to JIS - A1405, which was measured by a 2-microphone method by using a Multi-Channel Analyzing System model 3550, manufactured by Bruel & Kjar Co. (software: BZ5087 model 2-channel analyzing software). The measured sound area is from 0 to 5000 Hz, N = 8. Further, the static spring constant at 5 kgf was measured by an automatic hardness tester according to JASO-M304. When a load of 0.5 kgf is applied by a pressure plate of 200 mmΦ to the upper surface of a sample sized 300 x 300 mm and 50 mm thickness as a measuring specimen, the thickness is defined as the initial thickness. This is compressed to 0 - 65% at a pressing rate of 50 mm/min and the static spring constant at 5 kgf is measured. As the static spring constant is lower, the sound vibration performance in the low frequency region (500 - 1000 Hz) is more favorable.

As apparent from Table 4, there is a distinct difference for the sound absorbing characteristic between the non-woven fabric produced by the existent carding method and the non-woven fabric according to this invention. The first reason of developing the difference is that fine that could not be put to the carding machine and could not be used as the constituent fibers for the non-woven fabric in the existent non-woven fabric increased the total surface area of the fibers per unit volume of the non-woven fabric. That is, the sound absorption is taken place when sound waves (waves of air molecules) enter the non-woven fabric, and are brought into contact with the surface of the fibers to convert the sound energy into the frictional heat energy. Therefore, for the non-woven fabrics of an identical basis weight, the number of constituent fibers per unit volume increases as the average denier is lowered to increase the total surface area and conversion of the sound waves into the heat energy is increased to improve the sound absorbing characteristic. Fine of about 0.5 denier that could not be put to the carding machine so far develop such an effect.

The second reason is that the effect is developed by the three dimensional randomicity not attained in the existent non-woven fabrics. It is considered that since random reflection of propagating sound waves in the non-woven fabric was increased by the provision of the three dimensional randomicity, multiple reflection of sounds proceeds more tending to cause friction between fibers, so that the sound absorbing characteristic was improved. Those having so-called two dimensional randomicity produced by blow molding after subjecting to the carding machine as described in Japanese Patent Laid-Open No. 110370/1998 have orientation along the advancing direction of the fibers in the carding machine due to the characteristics of the carding machine, so that no improvement for the sound absorbing characteristic can be expected as in this invention.

Further, when considering with the macro point of view, the absorbing material has three dimensional degree of freedom as a whole in the case of the three dimensional randomicity. This is considered that while those of the two dimensional randomicity have a characteristic that sounds incident along the lamination direction do not propagate between the layers (this means that when the incident direction of the sounds and the direction of the lamination are in parallel with each other, the sound passes through and the sound absorbing characteristic is not favorable), whereas those of the three dimensional randomicity also have the characteristic capable of obtaining desired sound absorbing characteristic irrespective of the incident direction. That is, it is considered that since the direction of the reaction of force by the sound propagation is not uniform as the entire fiber assembly, the sound absorbing characteristic is improved more than that in the case of the two-dimensional randomicity.

Then, the non-woven fabric structure according to this invention is to be described. This example is merely an example of embodiments and the invention is not restricted only to such example.

The fiber lump constituting the non-woven fabric structure according to this invention is to be explained. The fiber lump is produced by pulverizing the special non-woven fabric described previously.

It is also possible to apply a heat treatment to the special non-woven fabric before pulverization as described above. The heat treatment is referred to as the primary heat fusing treatment and distinguished from the secondary heat fusing treatment as the heat fusing treatment of applying a heat fusing treatment to the fiber lump to form a non-woven fabric structure. The primary heat fusing treatment is applied at a temperature lower than the melting point of the fibers other than the low melting fibers and higher than the temperature of developing the fusibility of the low melting fibers. Such primary heat fusing treatment bonds other constituent fibers that intersect with the low melting fibers in the inside of the fiber lump at the intersections to provide the fiber lump with shape stability, as well as the low melting fibers provide the fiber lump with an appropriate rigidity in cooperation with the supporting function of other constituent fibers.

The special non-woven fabric produced in the step described above is pulverized by using a square pelletizer or rotary type universal pulverizer to obtain fiber lumps of a desired size. However, pulverization of the non-woven fabric is not restricted to that applied by the pulverizer described above. Further, the rotary type universal pulverizer has good productivity but somewhat injures the fibers, whereas those pulverized by using the square pelletizer suffer from no injuries for the fibers and have good impact resilience.

As the characteristic of the fiber lump, the shape with a smaller difference between the major axis and the minor axis is preferred and a shape with a minor axis of 2 to 100 mm and, more preferably, 5 to 20 mm is desirable. The shape with a greater difference between the major axis and the minor axis is not preferred since the moldability is poor. The impact resilience upon 25% compression is preferably from 0.1 to 30 x $10^{-2}$ kgf/cm$^2$ and, more preferably, 1.0 to 10 x $10^{-2}$ kgf/cm$^2$.

The non-woven fabric structure according to this invention has a structure formed by making the fiber lump into a desired shape and then applying a secondary heat fusing treatment thereby heat fusing the fiber lumps to each other. As the shape, the main portion, except for special portions such as ends or attaching portions upon use, preferably has an average thickness of 5 mm or more. When the average thickness is 5 mm or more, sufficient rigidity as the support can be maintained and fixed feeling, stable feeling and cushioning property are obtained favorably.

Further, the average density of the non-woven fabric is preferably from 0.01 to 0.50 g/cm$^3$. The range described above is preferred since sufficient strains can be obtained as the support and the feeling upon touch is preferred and an appropriate cushioning property can be obtained favorably.

The form based on the second heat fusing treatment between each of the fiber lumps forming the non-woven fabric structure is to be explained. The fiber lumps are in intimate contact with each other in a state formed into a desired shape by the secondary heat fusing treatment and the fiber lumps are bonded to each other by the hot melting of the low melting fibers as the constituent fibers.

Accordingly, in a case of applying the primary heat fusing treatment before forming the fiber lump, the non-woven fabric structure according to this invention has a feature in that it has a fused state based on the primary heat fusing treatment and the fused state based on the secondary heat fusing treatment in the inside. The primary heat fused form has a characteristic that the volume of primary heat fusing portion > volume of secondary heat fusing portion for the melting applied of the low melting fibers also incorporated with the secondary heat fusing treatment and, further, the primary heat fusing form has a node-like form. The secondary heat fused form has a feature of bonding between the fiber lumps to each other. It is considered that remarkable improvement of the cushioning property is developed by such a form.

Then, the result for the evaluation of the performance of the non-woven fabric structure according to this invention is shown. The performance was evaluated in accordance with the residual strain ratio as a recovery rate, in a case of using the non-woven fabric as the cushion material, when a load is applied for a predetermined time to the upper surface of the sample under a predetermined condition as the recovery characteristic to the compressive load and then the load is removed. The result is shown in Table 13.

The method of measuring the restorability under a normal temperature atmosphere and the evaluation method are as explained for the cushion material.

For the measuring method of the restorability in a high temperature atmosphere, and the evaluation method, a sample is cut out into 10 cm x 10 cm size and the initial thickness is measured. Then, the sample is put between iron plates and compressed to 50% of the initial thickness. It was left as it is at 70°C for 15 hours in a drier. After 15 hours, the load is removed and the thickness after compression is measured and the strain ratio is calculated according to the following equation.

```
Strain ratio (%) = (Initial thickness - thickness after

compression)/Initial thickness x 100
```

The evaluation for the strain ratio is indicated as "good" for less than 25%, as "ordinary" for 25% or more and less than 35% and as "bad" for 35% or more.

The measuring method and the evaluation method for the cushioning property are as explained for the cushion material.

Table 13

| | Strain ratio at normal temperature | Strain ratio at high temperature | Cushioning property | Moldability |
|---|---|---|---|---|
| This invention | good | good | good | very good |
| Convenient card lamination method | good | ordinary | ordinary | bad |

As apparent from Table 13, there is a remarkable difference for the compression strain ratio between the non-woven fabric structure produced by the existent carding method and the non-woven fabric structure according to this invention. The reason for developing the difference resides in that the fiber lumps constitute the non-woven fabric structure and the fiber lumps are bonded to each other at desired points of contact, and that the fiber lumps have a predetermined compression strength.

Fig. 1 shows a schematic view of a non-woven fabric structure according to this invention. As shown in Fig. 1, the non-woven fabric structure according to this invention has a composite structure having a supporting function due to the low melting fibers in the inside of the fiber lump and a supporting function due to the bonding between each of the fiber lumps.

That is, with a micro point of view, when a load is applied at a high temperature, since the low melting fibers in the inside of the fiber lump provides the fiber lump itself with an appropriate rigidity in cooperation with the supporting function of other fibers, they undergo a load in the inside of the fiber lumps. With a macro point of view, impact resilience between each of the fiber lumps is developed due to the state where the fiber lumps in the inside of the structure are arranged at random to each other, and the impact resilience, the stress dispersibility, the elasticity restorability and the compressive durability are improved by reduction of the inner stress due to the impact resilience.

Further, since the fiber lump itself has a desired impact resilience coefficient, even when the fiber lumps are blown molded, it can avoid the difficulty that the fiber lumps are crushed to each other making it difficult to control the desired density. Further, since the fiber lump has appropriate points of bonding, the fiber lump themselves have many points of bondings, so that shape stability as the non-woven fabric structure is improved.

Particularly, the non-woven fabric structure obtained by using highly crystalline core-sheath type low melting fibers of large denier and by applying primary and secondary heat fusing treatments with wet heat have favorable evaluation. In addition to the reason described above, as apparent from the electron microscopic photograph shown in Fig. 2, a portion larger than the low melting fibers before heat fusing treatment is formed as a node between one and other intersections of the low melting fiber and the low melting fiber or between the low melting fiber and other constituent fiber.

The node may be formed by merely elevating the temperature but, in this case, the temperature is raised considerably than the melting point of the highly crystalline low melting fibers (for example, by 30 to 50°C), which results in a drawback of tending to cause thermal degradation to polyester fibers as the main fibers of other fibers, as well as regular polyester for the core of the core-sheath type low melting fibers due to high temperature. Accordingly, the node can be formed more effectively by using the low melting fibers as described above and by applying a wet heat treatment at 160°C for 10 min.

As a result, when taking notice on one low melting fiber, it has a cross-like melting point as a point of bonding at the intersection, and has a portion comprising a core and a shape in which the sheath flows by over melting and forms a ball on the sheath to the core (hereinafter referred to as a node-like structure).

In the non-woven fabric structure according to this invention in a case of having a node-like structure in the inside as described above, the constituent fibers that intersect with the low melting fibers are bonded at the intersections to provide the non-woven fabric structure with the shape stability. The low melting fibers, in cooperation with the supporting function of other constituent fibers, provide the non-woven fabric structure with an appropriate rigidity. Further, against the load under severe conditions, not only the thermal fusion points at the intersections but also the composite structure comprising the node-like structure formed of the sheath welded to the core and core portions before and after the same can develop remarkable shape restorability.

That is, even when a compression load is applied in an atmosphere lower than the glass transition point of the low melting polymer, it is considered that since the structure has no evenly uniform radius but has a node portion enlarged intermittently after the removal of the load, it has a rigidity different from the structure of the uniform radius. On the other hand, it is considered that node-like structure provides not only the rigidity but also a function like that a spring structure.

Further, since fibers constituting the fiber lump has the random structure in at least two surfaces in view of directionality, the compressive strain ratio is remarkable different between the non-woven fabric structure produced by the existent carding method and the non-woven fabric structure according to this invention as apparent from Table 13.

It is considered for the reason of developing the difference that the fiber lumps constitutes the non-woven fabric structure and that the constituent fibers in the inside of the fiber lumps have a three dimensional random arrangement structure in view of the directionality. That is, when a load is applied at a high temperature, with a macro point of view, the low melting fibers in the inside of the fiber lump provide the fiber lump itself with appropriate rigidity in corporation with the supporting function of other constituent fibers, so that the portion receives the load. With a macro point of view, it is considered that the arrangement of the fiber lumps to each other in the three dimensional random arrangement in the structure develops the impact resilience between each of the fiber lumps and lowering of the inner stress due to the impact resilience improves the impact resiliency, stress dispersibility, elasticity restorability and durability. Further, it is considered that the entire cushion material has a three dimensional degree of freedom by the three dimensional random fiber arrangement and such three dimensional degree of freedom can provide excellent shape storability after removal of the load. That is, it is considered that since the directions of the reaction of the force exerted from the load is not uniform for the entire assembly of the non-woven fabric structure, the restoration characteristic is improved more than that in the case of the two dimensional random.

(Production Apparatus for Non-woven Fabric)

Fig. 3 and Fig. 4 show an example of a non-woven fabric and a production apparatus for non-woven fabric suitable to produce cushion material. The apparatus is described for explanatory purposes only and does not fall under the invention.

The non-woven fabric production apparatus comprises, as shown in the drawing, a charging duct (1) for charging previously opened fibers, an exhaust duct (2) for discharging air, an air outlet 1 (3) in a reserve trunk (4), the reserve trunk (4) for temporarily storing fibers, a feed roller (5) for feeding fibers from the reserve trunk (4) to an opener roller (6), and the opener roller (6) for opening fibers and feeding them to a feed trunk, the feed trunk (7) for feeding the fibers each of a predetermined amount to a delivery roller (9), an air outlets 2 (8) in the feed trunk (7), a delivery roller (9) for delivering a web (W) from the apparatus, a blower for blowing air to each of the portions of the apparatus, and a transportation conveyor (10) for transporting the web (W) to a subsequent step. Air flow is indicated by a blank arrow and a fiber flow is indicated by a solid arrow.

The non-woven fabric production apparatus are to be explained specifically for each of mechanisms.

< Charging Duct >

The charging duct (1) is a hollow cuboidal body situated above the apparatus and having an opening on the side or in the upper portion. This is a portion to which fibers (tufts) preliminary opened by an air stream are conveyed and discharged into the apparatus.

< Exhaust Dust >

The exhaust duct (2) is a duct situated near the charging duct and having an opening in the upper portion, which is adapted to discharge the air stream used for the transportation of the fibers (tufts) upon charging into the apparatus to the outside of the apparatus.

< Air Outlet 1 >

The air outlet 1 (3) is, for example, a perforated metal plate formed by opening plural small holes to a flat plate, or rectangular punched plate and has a structure that the area of the opening portions is adjustable. Further, as a countermeasure for suspended fibers, a filter is disposed before discharge out of the apparatus.

< Reserve Trunk >

The reserve trunk (4) has a vertical cylindrical shape for storing preliminary opened fibers (tufts) in which a feed roller (5) is disposed to the lower portion thereof. The fibers (tufts) are once stored in the reserve trunk (4) and then sent by the feed roller (5) to the opener roller (6).

< Feed Roller >

The feed roller (5) is disposed at the bottom of the reserve tank (4). The feed roller (5) has a teethed wire wound therearound and is designed such that the diameter is large and the length is longer by about 50 to 100 mm than the width of the web (W). With such a constitution, even raw materials such as bulky materials and those of large fiber length can be reliably delivered.

Further, the feed roller (5) is connected with an electric motor capable of variable speed control, for example, an inverter-controlled AC motor by way of a speed reducer. The speed control is applied based on the weight date for the web (W) from a weight checker for detecting the weight of the web (W) disposed to the exit of the apparatus or the height date for the web (W) from a sensor for detecting the height of the web (W) disposed at the exit of the apparatus by feed back control such that the weight and the thickness of the web (W) are always at predetermined values. Further, it is also preferred that the weight or the thickness of the web (W) are always at predetermined values by feedback control so as to always make the pressure in the feed trunk (7) constant based on the pressure data measured by the pressure sensor disposed in the feed trunk (7).

< Opener Roller >

The opener roller (6) is disposed below and near the feed roller (5). The opener roller (6) has several rows of spikes at the surface and the length is designed so as to be longer by about 50 to 100 mm than the width of the web (W). Further, the opener roller (6) is connected with an electric motor rotating at a constant speed by way of a speed reducer. The fibers (tufts) are effectively opened and supplied to the feed trunk (7) by the interaction between the opener roller (6) rotating at the constant speed and the feed roller (5) rotating at a variable speed.

< Feed Trunk >

The feed trunk (7) is a hollow cuboidal body having the opener roller (6) in the upper portion and the delivery roller (9) in the lower portion and having the air outlet 2 (8) in the intermediate portion. Fibers (tufts) supplied from the opener roller (6) are accumulated so as to be uniform in the lateral direction by the production method to be shown later in the feed trunk (7) and formed into a web (W).

< Air Outlet 2 >

The air outlet 2 (8) comprises a perforated metal plate having plural holes each of small diameter formed in a flat plate or an apertured plate of a rectangular shape, for example, having a structure capable of controlling the area for the opening portions, which is disposed below walls before and after the feed trunk (7) and disposed over the entire lateral direction of the apparatus.

< Delivery Roller >

The delivery roller (9) comprises, for example, two rollers opposed in the horizontal direction and designed such that the length is longer by about 50 to 100 mm than the width of the web (W). Further, the delivery roller (9) is connected with an electric motor rotating at a constant speed by way of a speed reducer. The web (W) accumulated in the feed trunk (7) is discharged out of the apparatus by the opposing to delivery rollers (9).

< Transportation Conveyor >

The transportation conveyor (10) is, for example, a known belt conveyor for discharging the web (W) produced on the upper surface thereof to the outside of the apparatus in the horizontal direction.

(Production Method of Non-woven Fabric)

The non-woven fabric according to this invention is produced by vertically accumulating preliminary opened fibers using an air stream, with the direction after extrusion being horizontal. In a case of mixing binder fibers, it is also preferred to apply a heat treatment by a heat setter (hot blow treatment, infrared ray treatment, wet heat treatment or the like), thereby heat forming the non-woven fabric. In a case of not applying heat fusion, it is preferred to substantially bond them at portions of contacts between each of the fibers by mechanical means such as needle punching.

The production method of the non-woven fabric is to be described specifically in the order of steps.

< Preliminary Fiber Opening Step >

Fibers (tufts) taken out of raw stocks by a bale opener are made gradually fine and uniform by an opener generally used, for example, in mixing and picking steps. A beater, cylinder, spike roller and teethed roller are disposed to the opener and fiber compositions are fully opened by the roller mechanism. For producing a uniform web (W), it is necessary that the fibers (tufts) are sufficiently opened and the opening rate is preferably 95% or more.

< Air Transportation Step >

Opened fibers (tuft) are pneumatically transported from the opener to the charging duct (1) of the production apparatus according to this invention.

< Reserve Step >

Fibers (tufts) charged from the charging duct (1) of the apparatus are once stored in the reserve trunk (4). In the reserve trunk (4), the flow rate of air into the reserve trunk (4) is adjusted to control the air flow rate such that the filling height and the filling density in the reserve trunk (4) are constant. That is, when the pressure in the trunk duct increases by the increase of the level of the fibers (tufts) or the density thereof in the reserve trunk (4), the pressure change is detected and the flow rate of an air stream from the blower is decreased to decrease the feed amount. On the other hand, when the pressure in the trunk duct lowers in accordance with the decrease of the level or the density of the fibers (tufts), the pressure change is detected and the flow rate of the air stream is increased to increase the stock feed amount. With such control, the machine operation is not interrupted and the charging level can be kept constant. The amount of blow is controlled by the control of the number of rotation of the blower disposed in the central portion of the apparatus and by changing the opening area of the air outlet (3).

< Feed Step >

Then, the fibers (tufts) are fed into the feed trunk (7). In this case, the feed roller (5) is disposed at the bottom of the reserve trunk (4) and the web (W) is supplied by way of the feed roller (5) to the opener roller (6). As described above, since the feed roller (5) has the teethed wire wound therearound and the diameter is set larger, raw materials even of bulky raw materials and raw materials of longer fiber length can be fed reliably.

The speed of the feed roller (5) is controlled by detecting the pressure in the feed trunk (7). Further, since the opener roller (6) has a constant speed and has several rows of spikes along the circumference, the fibers (tufts) are further made uniform and fed to the feed trunk (7). The web (W) in the feed trunk (7) is uniformly compressed in the direction of the width of the web (W) in the feed trunk (7) by an air stream generated from the blower in the apparatus, and the air stream is controlled so as to return by way of the air outlet 2 (8) to the blower. This can make the density of the web (W) and the depth of the web (W) accumulated in the feed trunk (7) constant.

Since the amount of the web (W) in the feed trunk (7) is extremely small, the lower portion thereof is not compressed by its own weight. The web (W) is compressed by the air stream from the blower and the speed of the feed roller (5) is controlled such that the compression pressure is constant. That is, the speed is lowered, that is, the feed amount of the fibers (tufts) is decreased along with increase of the inner pressure of the feed trunk (7), whereas the speed of the feed roller (5) is increased, that is, the feed amount of the fibers (tufts) is increased along with the lowering of the inner pressure.

The fibers (tufts) discharged from the opener roller (6) are automatically directed by the air stream from the blower to a portion in the feed trunk (7) where the level of the raw material is low, that is, to a portion where the flow resistance of air is low. This can eliminate the difference of the level in the raw material over the entire width of the apparatus in the feed trunk (7) and, finally, high uniformity can be obtained over the entire web (W).

Further, instead of controlling the thickness of the web (W) by the change of the air stream caused by localization in the lateral direction as described above, a raw material of an optionally set weight may be accumulated in accordance with the actually weighted value of the arriving raw material by an automatic weighing system such as a load cell system. Further, a raw material of optionally set weight may be accumulated with the fibers (tufts) being beaten by a beater instead of the air stream.

< Discharge Step >

The fibers (tufts) in the feed trunk (7) are sent by the delivery roller (9) out of the apparatus. The discharged web (W) is transported by the transportation conveyor (10) to a subsequent step.

< Subsequent Step 1 >

At first in a case of a web (W) containing heat fusible fibers, it is subjected to a heat setter. The heat setter is a known device and has a structure, for example, of allowing the web (W) to pass through the device having a heat source by way of a conveyor. The heat source can include, for example, a hot blow obtained from a combustion gas, high temperature steam and far-infrared rays. The heat setting temperature is such a temperature at which the low melting ingredient is melted and the high melting ingredient is not melted. By the treatment in the subsequent step 1, the low melting ingredient is melted and substantially fused at points of contact with the high melting ingredient.

< Subsequent Step 2 >

Further, in a case of a web (W) containing the heat fusible fibers, it is subjected to a wet heat setter in addition to the treating method described above or in place of the above-mentioned method. The wet heat setter is a known device and has a structure of charging the web (W) in a steam vessel and then the steam vessel is tightly sealed to reduce the pressure and wet heat steams at high pressure and high temperature are entered. The heat setting temperature is such a temperature at which the low melting ingredient is melted and the high melting ingredient is not melted. By the heat treatment in the subsequent step 2, heat can be transferred as far as the inside of the web (W) in which the low melting ingredient is melted throughout the web (W) and fused substantially at the points of contact with the high melting ingredient. In such a method, when the web (W) transported on the transportation conveyor 10 is treated by stacking several of such webs (W), steams can permeate as far as the inside of them to enable uniform heat setting. Further, when such several sheets of webs (W) are stacked, a non-woven fabric of different densities in the direction of the thickness can be produced easily by stacking those of different fiber densities. Any of the cases is suitable to the production of cushion materials.

< Subsequent Step 3 >

A web (W) whether it includes heat fusion or not can substantially be bonded at portions of contact between each of the fibers mechanically in the subsequent step. For example, fibers in the web (W) are entangled to each other by sticking plural needles into and out of the web (W) in the vertical direction repeatedly for a number of times to bond the fibers in the contact portions thereof.
Then, a method of producing the non-woven fabric structure using fiber lumps is to be described.
The subsequent steps 1 and 2 described above are primary heat fusing treatment in a case applied to the non-woven fabric structure using the fiber lumps.

< Production of Non-woven Fabric 1 >

A non-woven fabric 1 with 20 mm thickness and 500 g/m$^2$ of basis weight was obtained by mixing 80% by weight of hollow conjugate polyester fibers of 6 denier and 51 mm as other constituent fibers and 20% by weight of low melting polyester fibers of 2 denier and 51 mm with a melting point of 110°C as the low melting fibers, to form a non-woven fabric in the non-woven fabric production step described above and slightly entangling them by needle punching.

< Production of Non-woven Fabric 2 >

A non-woven fabric 2 with 30 mm thickness and 500 g/m$^2$ of basis weight was obtained by mixing 80% by weight of hollow conjugate polyester fibers of 6 denier and 51 mm as other constituent fibers and 20% by weight of low melting polyester fibers of 2 denier and 51 mm using a copolyester having a melting point of 110°C for a sheath as the low melting fibers, to form a non-woven fabric in the non-woven fabric production steps described above and then applying an infrared heat fusing treatment as the primary heat fusing treatment. The conditions for the primary heat fusing treatment are at the temperature of an upper heater of 250°C and a lower heater of 350°C.

< Production of Non-woven Fabric 3 >

A non-woven fabric 3 of 30 mm thickness and 500 g/m$^2$ of basis weight was obtained by mixing 50% by weight of hollow conjugate polyester fibers of 6 denier and 51 mm as other constituent fibers, 30% by weight of silicon oil coated cotton of 6 denier and 51 mm and 20% by weight of core-sheath type low melting fibers using a copolyester having a melting point of 110°C for a sheath, of 2 denier, 51 mm as the low melting fibers, to form a non-woven fabric in the non-woven fabric production steps described above and then applying an infrared heat fusing treatment as the primary heat fusing treatment. The conditions for the primary heat fusing treatment are at the temperature of an upper heater of 250°C and a lower heater of 350°C.

< Production of Non-woven Fabric 4 >

A non-woven fabric 4 of 20 mm thickness and 500 g/m$^2$ of basis weight was obtained by mixing 80% by weight of hollow conjugate polyester fibers of 6 denier and 51 mm as other constituent fibers, and 20% by weight of core-sheath type low melting fibers using a highly crystalline polyester having a melting point of 160°C for a sheath of 15 denier and 51 mm as the low melting fibers, to form a non-woven fabric in the non-woven fabric production steps described above and then slightly entangling them by needle punching.

< Production of Non-woven Fabric 5 >

The non-woven fabric 5 with 30 mm thickness and 500 g/m$^2$ of basis weight was obtained by mixing 80% by weight of hollow conjugate polyester fibers of 6 denier and 51 mm as other constituent fibers and 20% by weight of core-sheath type low melting fibers of 15 denier and 51 mm using a highly crystalline polyester having a melting point of 160°C for a sheath as the low melting fibers, to form a non-woven fabric in the non-woven fabric production steps described above, and then applying an infrared heat fusing treatment as the primary heat fusing treatment. The conditions for the primary heat fusing treatment are at the temperature of an upper heater of 350°C and a lower heater of 450°C.

< Production of Fiber Lump >

The non-woven fabrics 1 and 4 produced in the steps described above were pulverized by using a square pelletizer to obtain fiber lumps each sized 8000 mm$^3$ and having an impact resilience stress at 25% compression of 5 x 10$^{-2}$ kgf/cm$^2$. Further, the non-woven fabrics 2, 3 and 5 applied with the primary heat fusing treatment were pulverized by a rotary type universal pulverizer manufactured by Sanriki Seisakusho to obtain fiber lumps each sized 1000 mm$^3$ and having impact resilience stress at 25% compression of 10 x 10$^{-2}$ kgf/cm$^2$. In the pulverization of the non-woven fabric, use of the pulverizer described above is not limitative. Further, while the rotary type universal pulverizer shows good productivity but it somewhat damages the fibers, whereas those pulverized by using the square pelletizer suffers from no damages to the fibers and show good impact resilience.

< Non-woven Fabric Structure A >

A mold (molding die) conforming a desired shape is manufactured, and fiber lumps prepared as described above are mixed and blown into a molding cavity of the mold. When the fiber lumps are charged into the mold, only the air for transportation is released through an exhaust port out of the mold and the fiber lumps are efficiently charged in the mold.
Then, after charging the fiber lumps, a secondary heat fusing treatment is applied. The heat fusing treatment is applied by blowing a hot blow formed by a hot blow generator by way of a blowing tube and a duct through a blowing duct into the mold. At the same time, a pressing machine is operated to shape the charged fiber lumps into a predetermined configuration and size under compression.
Further, instead of the hot blow drying, blowing of super heated steams into the mold is preferred since there is no unevenness in the distribution of the temperature and uniform heat fusing treatment can be attained. In this case, the condition for the secondary fusing treatment temperature for the non-woven fabric 1 is 130°C, the condition for the secondary fusing treatment temperature for the non-woven fabric 4 is 190°C, the condition for the secondary fusing treatment temperature for the non-woven fabrics 2 and 3 are 110°C and the condition for the secondary fusing treatment temperature for the non-woven fabric 5 is 160°C at wet heating. The non-woven fabric structures produced from the fiber lumps using the non-woven fabrics 1, 2, 3, 4 and 5 as the raw material are, respectively, non-woven fabric structures A1 A2, A3, A4 and A5.

< Non-woven Fabric Structure B >

The fiber lumps prepared as described above were measured batchwise and the secondary heat fusing treatment is applied for desired amount of weight. In this case, the secondary heat fusing treatment for the non-woven fabric 1 is used. In this case, the condition for the secondary heat fusing treatment of the non-woven fabric 1 is 130°C and the condition for the secondary heat fusing treatment of the non-woven fabric 4 is 190°C, the condition for the secondary heat fusing treatment of the non-woven fabrics 2 and 3 is 110°C and the condition for the secondary heat fusing treatment of the non-woven fabric 5 is 160°C by wet heating. The non-woven fabric structures produced from fiber lumps using the non-woven fabrics 1, 2, 3, 4 and 5 as the raw material are, respectively, non-woven fabric structures B1 B2, B3, B4 and B5.

Industrial Applicability

Further, the invention defined in claim 1 can provide a non-woven fabric not requiring a carding machine and can provide a non-woven fabric produced at a reduced production cost due to saving of steps.

Further, the invention defined in claim 2 has an effect capable of saving steps since the carding step is not required and capable of reducing the production cost compared with the existent production method by the carding method.

Further, the invention as defined in claim 3 can provide a non-woven fabric structure having a structural feature that fiber lumps of indefinite shape are bonded by heat melting of the constituent fibers, provided with rigidity between the fiber blocks to each other and the cushioning property in addition to the rigidity and the cushioning property of the fiber lumps themselves, and suitable to automobile application use or application use for bed mattress.

## Claims

1. A method of producing a non-woven fabric of a three dimensional structure comprising fibers arranged along random directions in at least two surfaces of the three dimensional structure, which comprises preliminarily opening fibers by a preliminary opening machine, then accumulating fibers so as to automatically stack them vertically to a portion of a low stacking level by using an air stream and then substantially bonding portions of contact between each of the fibers.

2. A method of producing a non-woven fabric according to claim 1, further comprising applying primary heat fusion by a heat fusing treatment to form a non-woven fabric, forming the non-woven fabric into fiber lumps at least smaller than the non-woven fabric, forming the fiber lumps into a desired shape and then applying secondary heat fusion by a heat fusing treatment.

3. A non-woven fabric structure constituted by bonding plural fiber lumps each comprising fibers in which the fiber lumps comprise at least two kinds of fibers, one of constituent fibers contains an ingredient having a melting point lower than that of other fibers, the fiber lumps are substantially bonded at portions of contact between each of the fibers with the low melting ingredient and the fibers constituting the fiber lump are arranged along random directions in at least two surfaces of the fiber lump.

## Patentansprüche

1. Verfahren zur Herstellung eines Vliesstoffes mit einer dreidimensionalen Struktur, welcher Fasern enthält, die in willkürlichen Richtungen an wenigstens zwei Oberflächen der dreidimensionalen Struktur angeordnet sind, umfassend das vorbereitende Öffnen der Fasern mittels einer Vorrichtung zum vorbereitenden Öffnen, das anschließende Ansammeln von Fasern mittels eines Luftstroms, um diese automatisch senkrecht zu einem Abschnitt mit geringer Stapelhöhe zu stapeln, und das anschließende wesentliche Verkleben derjenigen Abschnitte, die Kontaktbereiche zwischen den einzelnen Fasern darstellen.

2. Verfahren zur Herstellung eines Vliesstoffes nach Anspruch 1, weiter umfassend das Anwenden eines ersten Wärmeschmelzens mittels einer Wärmeschmelzbehandlung zum Bilden eines Vliesstoffes, das Ausbilden des Vliesstoffes in Form von Faserstücken, die zumindest kleiner als der Vliesstoff sind, das Ausbilden der Faserstücke in einer gewünschten Form und das anschließende Anwenden eines zweiten Wärmeschmelzens mittels einer Wärmeschmelzbehandlung.

3. Vliesstoffstruktur, gebildet durch Verkleben mehrerer Faserstücke, welche jeweils Fasern enthalten, wobei die Faserstücke wenigstens zwei Arten von Fasern aufweisen, wobei einer der Faserbestandteile einen Bestandteil mit einem Schmelzpunkt, der geringer als derjenige der anderen Fasern ist, enthält, die Faserstücke im Wesentlichen in Abschnitten, die Kontaktbereiche zwischen den Fasern mit dem niedrigschmelzenden Bestandteil darstellen, verklebt sind und die Fasern, die die Faserstücke bilden, in zufälligen Richtungen an wenigstens zwei Oberflächen des Faserstücks angeordnet sind.

## Revendications

1. Procédé de production d'un tissu non tissé d'une structure tridimensionnelle comprenant des fibres agencées le long de directions aléatoires dans au moins deux surfaces de la structure tridimensionnelle, qui comprend l'ouvraison préliminaire de fibres par une ouvreuse préliminaire, puis l'accumulation de fibres afin de les empiler verticalement de façon automatique en une partie d'un faible niveau d'empilement en utilisant un jet d'air et en liant ensuite sensiblement des parties de contact entre chacune des fibres.

2. Procédé de production d'un tissu non tissé selon la revendication 1, comprenant en outre l'application d'une fusion thermique primaire par un traitement de fusion thermique pour former un tissu non tissé, la formation du tissu non tissé en agglomérats de fibres au moins plus petits que le tissu non tissé, la formation des agglomérats de fibre en une forme désirée et l'application ensuite d'une fusion thermique secondaire par un traitement de fusion thermique.

3. Structure de tissu non tissé constituée par la liaison de plusieurs agglomérats de fibres, chacun comprenant des fibres dans lesquelles les agglomérats de fibre comprennent au moins deux sortes de fibres, une sorte de fibres constitutives contient un ingrédient ayant un point de fusion inférieur à celui d'autres fibres, les agglomérats de fibre sont sensiblement liés au niveau de parties de contact entre chacune des fibres avec l'ingrédient à fusion basse et les fibres constituant l'agglomérat de fibres sont agencées le long de directions aléatoires dans au moins deux surfaces de l'agglomérat de fibres.

Fig. 1

Fig. 2

Fig. 3

Fig. 4

## EP 1 143 057 B1

**Patent documents cited in the description**

- JP 10110370 A
- JP 11030701998 B
- JP 8209514 A
- JP 7068061 A
- JP 6094061 A

- JP 6294061 A
- GB 2245607 A
- US 4083913 A
- EP 340763 A
- JP 9137350 A